# EUROPEAN PATENT APPLICATION

(11) **EP 1 707 754 A2**
(43) Date of publication of application: **04.10.2006**
(21) Application number: 06110909.6
(22) Date of filing: 09.03.2006
(51) Int. Cl.: F01D 17/14

(54) **Pilot valve for steam turbine**

(30) Priority: 31.03.2005 GB 0506592
(71) Applicant: Alstom Technology Ltd, 5400 Baden (CH)
(72) Inventor: Padfield, Roger, Rugby, Warwickshire CV22 5RS (GB); Rice, Timothy Stephen, Rugby, Warwickshire CV22 7DY (GB); Price, Edward, Braunston, Leicestershire NN11 7JW (GB)

(57) **Abstract**

A pilot valve (31) associated with a main valve (32) for the admission of steam to a steam turbine comprises convergent-divergent nozzle (47) formed by a concave deflector (35) that is part of the pilot valve head (33) and a convex portion of the pilot valve seat (34). The nozzle (47) effects that the ratio of the cross-sectional area of the nozzle throat (42) to the cross-sectional area at the nozzle exit varies with valve lift and that the steam flow through the valve is smooth and directed away from critical valve components. This allows a minimisation of erosion of critical valve components and an increase in valve operational lifetime.

## Description

### Technical field

This invention pertains to steam turbines and in particular to a nozzle for a pilot valve associated with the steam admission to the steam turbine.

### Background art

The steam admission to a steam turbine is typically controlled by a main stop valve with an incorporated pilot valve and a following control valve.
For example, US 4,928,733 discloses a stop valve with a pilot valve for steam admission to a steam turbine, where the stop valve is first fully opened before the main valve is opened. The forces for actuating the valve are reduced by means of a balancing chamber having two diameters.

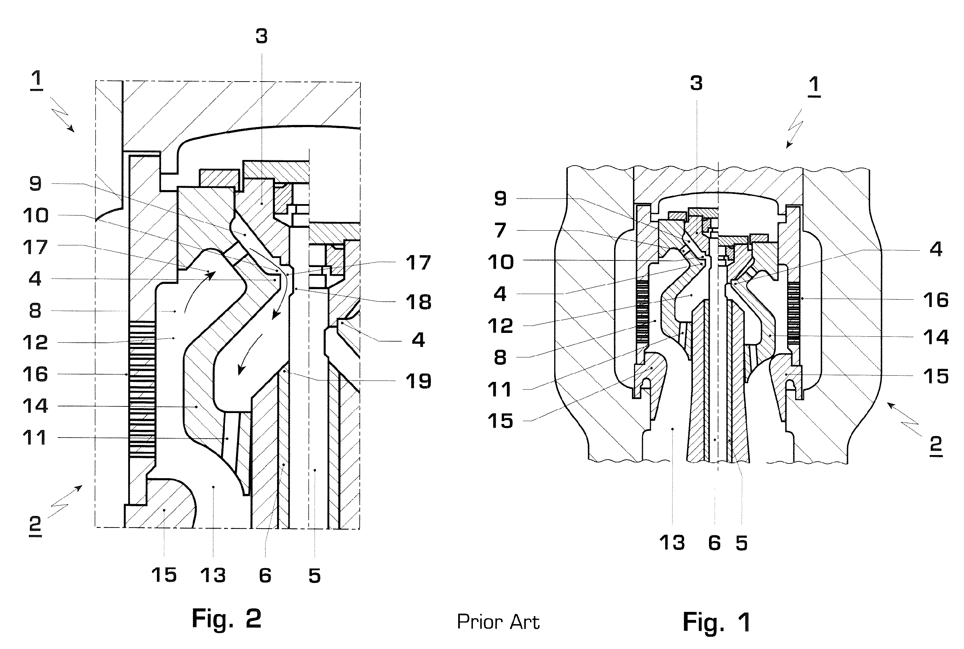

Figure 1 shows another known valve arrangement with main stop valve and pilot valve. The main stop valve is held closed by a high steam pressure while the pilot valve, which is first fully opened prior to the opening of the main valve, equalizes the steam pressure on each side of the main stop valve in order to reduce the required force to open the main valve. Effectively, the pilot valve alone controls the initial start-up of a steam turbine. This type of start-up operation includes periods of time, during which a small aperture allows supersonic steam jets to pass through the pilot valve. Some of these jets impinge on valve components, in particular on critical components such as the main stop valve spindle and spindle guide. This causes erosion that is especially rapid due to water droplets in the supersonic jets and results in premature failure of the valve. Classic methods of deflecting the steam flow away from the critical components are usually not successful due to the supersonic speeds of the steam flows.

In some known applications the pilot valve may operate rapidly or infrequently giving rise to low wear rates. However, significant wear has been encountered during prolonged operation with just pilot valve flow.

### Summary of the invention

In view of the described background art, it is an object of the invention to provide a pilot valve for the control of steam admission to a steam turbine with increased operation lifetime.

According to the invention, a pilot valve associated with a main stop valve for steam admission to a steam turbine, having a spindle and spindle guide, comprises a supersonic nozzle having a variable annular convergent-divergent nozzle. Such nozzle comprises in the direction of steam flow a first annular convergent section leading to a nozzle throat that is followed by a second annular divergent section. In particular, the nozzle provides an area expansion following the nozzle throat that varies with the varying steam pressure ratios over the valve as a result of the varying degrees of valve opening or valve lift. The ratio of the cross-sectional area at the nozzle exit to the cross-sectional area at the nozzle throat varies according to the valve lift. The valve thus has an improved flow geometry that provides a steam flow that does not impinge on critical valve components and therefore allows protection of these critical components from erosion and minimisation of pilot valve component wear.
A first embodiment of the invention that provides a variation of area ratios with varying valve lift, comprises a valve nozzle formed by a deflector member that is part of the valve head and a counterpart member that is part of the valve seat and is arranged opposite from the deflector. In particular, the deflector member and counterpart member both have smooth, curved shapes where the deflector has a concave shape and the counterpart member on the valve seat has a convex shape. Together they form between them the convergent-divergent nozzle with variable area ratios as a function of valve lift. This nozzle provides the improved controlled and ordered steam flow where its continuous curvature redirects the exit flow away from the critical components. In particular, in this nozzle the fluid properties at supersonic conditions are utilised to transport the region of shock waves and flow separation away from the critical regions where damage would otherwise occur.
The convergent-divergent nozzle and continuously curved shapes of the deflector and counterpart member achieve a smooth speed control of the supersonic jets as function of valve lift. Thus an attached flow of the supersonic steam along the deflector and counterpart member and an effective direction of the steam jet flow away from critical components is achieved. The direction of the concave deflector away from the spindle together with the shape of the counterpart member allows a direction of the steam flow away from critical components such as the spindle and spindle guide such that erosion of these components is minimised.
For a particular valve with a particular application, the curved shapes of deflector and counterpart member are appropriately chosen to provide a quantitatively suitable area expansion at all valve lift positions. This achieves an effective deflection of the steam flow away from the critical components.

The valve according to the invention is applicable to the admission of main steam from a boiler as well as of reheat steam to a turbine.

### Brief description of the figures

Figure 1 shows a cross-sectional view of a pilot valve for the main steam admission to a turbine according to the state of art in closed and fully open lift positions,
figure 2 shows in detail the head and seat of the pilot valve of figure 1 in opened lift position and in particular the locations of erosion resulting in premature failure of the valve,
figure 3 shows a cross-sectional view of a pilot valve for steam admission to a turbine according to the invention in closed and fully open lift positions,
figure 4 shows in detail the deflector and counterpart member of the valve of figure 3 in open valve position,
figures 5a) - e) show in detail the variable annular convergent-divergent nozzle of the valve according to the invention where in a) the closed valve position, b)-d) partially open valve positions, and e) the fully open valve position are shown, figure 6a) shows the throat and expansion area of the nozzle of figures 2-5, and
figure 6b) shows a conceptual example of the ratio of throat to expansion area as a function of pilot valve lift, respectively.

### Best mode of carrying out the invention

Figures 1 and 2 show a pilot valve 1 associated with a main valve 2 for steam admission to a steam turbine according to the state of the art, the valve comprising a pilot valve head 3, a pilot valve seat 4, a spindle 5 and a spindle guide 6. The valve seat 4 comprises an inlet passage 7 for turbine start-up steam, where the passage leads from a first steam space 8 to a valve passage 9. This passage 9 leads to a valve throat 10 formed by the pilot valve head 3 and pilot valve seat 4. The pilot valve seat 4 furthermore comprises an outlet passage 11 leading from a second steam space 12 to a main steam inlet 13 to the steam turbine.
The main valve 2 is formed by a main valve head 14, which carries the pilot valve seat 4, and the main valve seat 15 opposite from the main valve head 14.
In the valve's closed position, as shown on the right hand side of figure 1, the pilot valve head 3 and pilot valve seat 4 have angular shapes interlocked with one another in a seal tight contact. In this closed position, both the pilot valve 1 as well as the main valve 2 is closed in that the pilot valve seat 4 is in seal tight contact with the pilot valve head 3 at the throat 10 as well as the shut main valve where the main valve head 14 is sealed tight against the main valve seat 15. Thus, steam entering from the boiler through a strainer 16 is prevented from passing into the steam inlet 13 by either route.
In order to open the pilot valve 1, the spindle 5 rises first to open the pilot valve 1 allowing start-up steam to pass through the inlet passage 7, through the throat 10 into space 12, and via the outlet passage 11 into the steam inlet 13 to the turbine. In the valve's open position, as shown on the left hand side of figure 2, both the pilot valve 1 and main valve 2 are open allowing steam entering through the strainer 16 to pass by main valve seat 15 and flow directly into the main steam inlet 13 to the turbine.
Figure 2 shows the steam flow 17 of the start-up steam passing through the opened pilot valve 1. The steam flows through the throat 10 and impinges on the spindle 5 causing erosion at location 18. The spindle guide 7 can also be damaged by erosion at location 19.

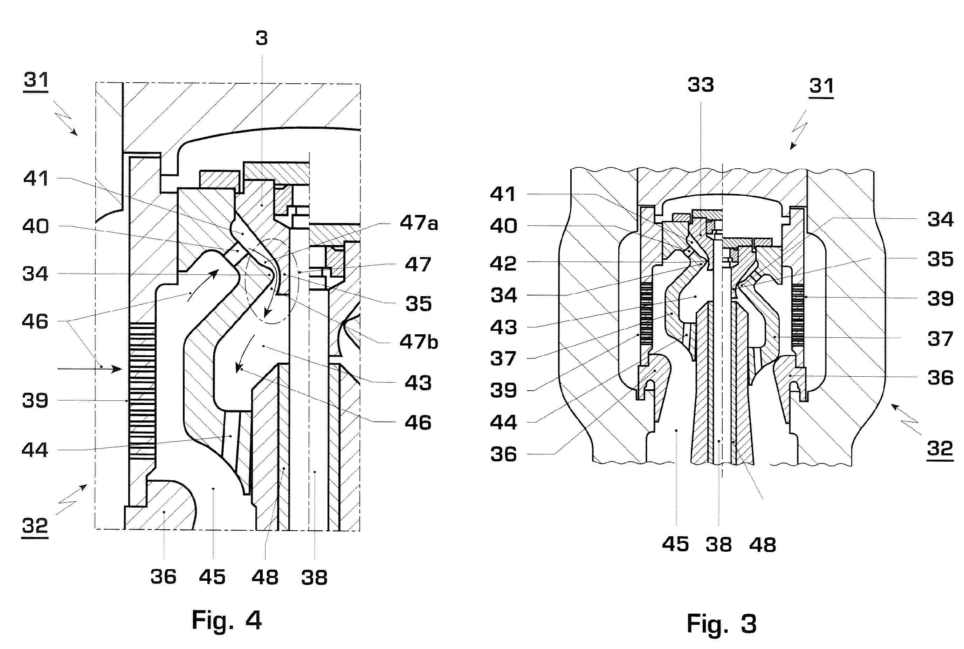

Figure 3 shows a pilot valve 31 according to the invention and associated with a main valve 32 for steam admission to a steam turbine. The right hand portion of the figure again shows the completely closed position and the left hand portion of the figure the fully open position of the valves. The pilot valve head 33 and pilot valve seat 34 are shaped according to one example of the pilot valve according to the invention having a continuous curvature and forming a convergent-divergent nozzle where the expansion area varies according to the lift of the valve and pressure ratio resulting from that lift. For this, the pilot valve head 33 is designed with a section that extends toward the main valve 32to a larger degree than in the pilot valve according to the state of the art. This longer extending section forms in particular a deflector 35 that has a concave shape directed away from the spindle.

The portion of the pilot valve seat 34 arranged opposite from the deflector 35 has a continuous convex shape directed toward the concave deflector.
In the fully closed position on the right hand side of the figure, both pilot valve 31 and main valve 32 formed by main valve seat 36 and the main valve head 37 (carrying the pilot valve seat 34) are closed. When the spindle 38 rises, the pilot valve 31 opens first allowing steam entering through the strainer 39 to flow through the inlet passage 40, into steam passage 41, through the throat 42 into space 43, and finally via the outlet passage 44 into the steam inlet 45 to the turbine. When the spindle 38 rises further, the pilot valve seat 34 moves up and away from main valve seat 36 to open the main valve 32 as shown on the left hand side of the figure.
Figure 4 shows in more detail the opened pilot valve 31 and the steam flow 46 having entered through the strainer 39, the inlet passage 41, through the convergent-divergent nozzle 47, formed by the concave deflector 35 of the pilot valve head and the convex portion of the pilot valve seat 34, and into the space 43. The steam flow 46 is attached to the walls of the nozzle 47 and is deflected away from spindle 38 and spindle guide 48. Steam impingement and erosion on the critical components of the valve is effectively reduced such that valve operational lifetime is increased.

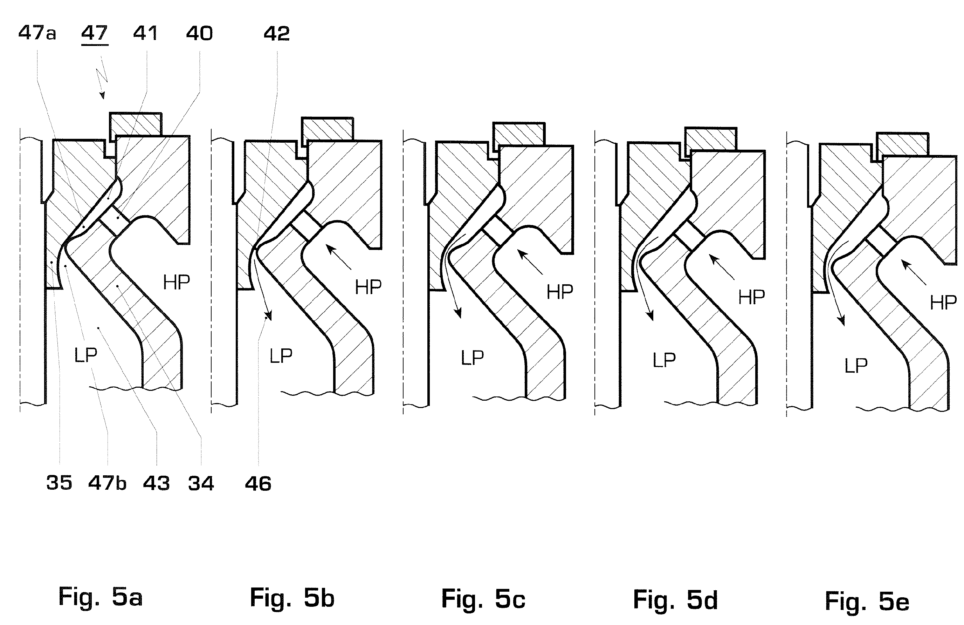

Figures 5a) through 5e) show the convergent-divergent nozzle for increasing degrees of valve lift and according varying pressure ratios between the high pressure (HP) prior to the throat 42 and the low pressure (LP) in space 43 following the throat 42, where a) shows the fully closed valve, b) the valve ¼ open, c) ½ open, d) ¾ open, and e) the fully opened valve.

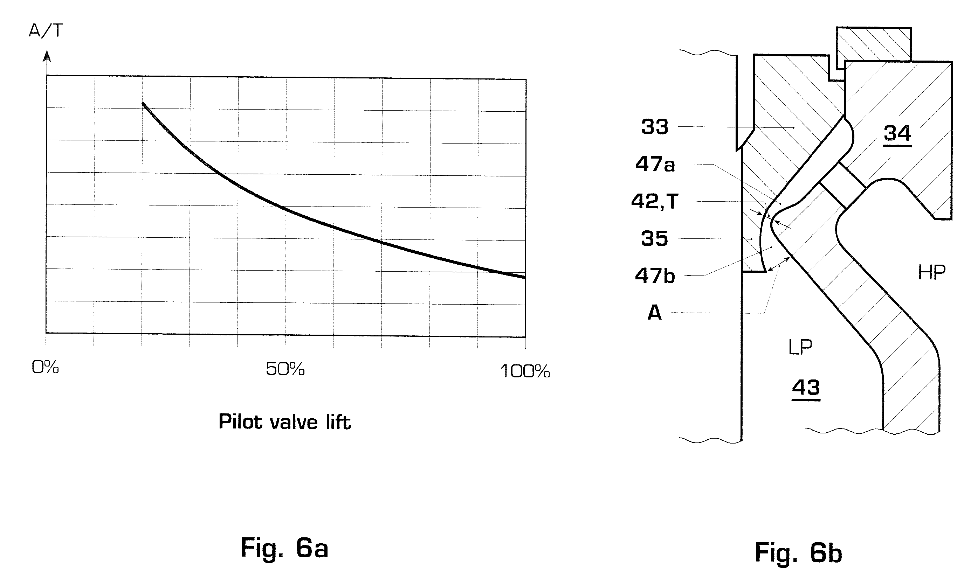

Figure 6a) shows the convergent-divergent nozzle 47 and the cross-sectional areas T and A at throat and exit of the nozzle 47, respectively. The graph in figure 6b) shows conceptually the variation of the ratio A/T, or of the cross-sectional area of the expansion A to the cross-sectional area at the throat T as a function of pilot valve lift. In general, the ratio A/T decreases continuously with increasing valve lift. The appropriate function of A/T to pilot valve lift and the resulting necessary shape of the deflector and valve seat depend on the pilot valve application and the sizing of the valve.

### Terms used in Figures

- 1-16: parts in valve according to prior art
- 1: pilot valve
- 2: main valve
- 3: pilot valve head
- 4: pilot valve seat
- 5: spindle
- 6: spindle guide
- 7: pilot valve steam inlet passage
- 8: first steam space
- 9: valve start-up steam passage
- 10: valve throat
- 11: steam outlet passage
- 12: second steam space
- 13: main steam inlet to turbine
- 14: main valve head carrying pilot valve seat
- 15: main valve seat
- 16: strainers
- 17: steam flow
- 18: location of eroded area
- 19: location of eroded area
- 31-48: parts of valve according to the invention
- 31: pilot valve
- 32: main valve
- 33: pilot valve head
- 34: pilot valve seat
- 35: deflector, part of pilot valve head 34
- 36: main valve seat
- 37: main valve head (carrying pilot valve seat 34)
- 38: spindle
- 39: strainers
- 40: inlet passage
- 41: steam passage
- 42: throat
- 43: space
- 44: outlet passage
- 45: steam inlet to turbine
- 46: steam flow
- 47: convergent-divergent nozzle
- 48: spindle guide
- A: area of exit cross-section of nozzle
- T: area of throat cross-section of nozzle

## Claims

1. Pilot valve (31) associated with a main stop valve (32) for steam admission to a steam turbine, the pilot valve (31) comprising a pilot valve head (33), a pilot valve seat (34) and a spindle (38),
**characterised in that** the pilot valve (31) comprises an annular supersonic convergent-divergent nozzle (47) having in the direction of steam flow (46) a first annular convergent section (47a), a throat (42), and a second annular divergent section (47b), where the ratio of the cross-sectional area (A) at the nozzle exit to the cross-sectional area (T) at the nozzle throat (42) varies with the lift of the pilot valve (31).

2. Pilot valve (31) according to claim 1
**characterised in that**
the nozzle (47) is formed by a deflector (35) forming part of the pilot valve head (33) and having a continuously concave shape directed away from the spindle (38) of the pilot valve (31), and the nozzle (47) is further formed by part of the pilot valve seat (34) having a continuously convex shape directed toward the deflector (35).

3. Pilot valve (31) according to claim 1
**characterised in that**
the ratio of the cross-sectional area (A) at the nozzle exit to the cross-sectional area (T) at the nozzle throat (42) decreases continuously with increasing valve lift.

4. Use of the pilot valve (31) according to claim 1
for the control of main steam flow or of reheat steam flow to a steam turbine.
